# FASCICULE DE BREVET EUROPEEN

(11) **EP 1 261 555 B1**
(45) Date de publication et mention de la délivrance du brevet: **14.09.2005**
(21) Numéro de dépôt: 01913950.0
(22) Date de dépôt: 07.03.2001
(51) Int. Cl.: C03C 4/14, C03C 3/076, C03C 3/095, C03C 3/11, H01J 9/18, H01J 29/02

(54) **ESPACEUR EN VERRE ET SON UTILISATION**
ABSTANDHALTER AUS GLAS UND SEINE VERWENDUNG
GLASS SPACER AND ITS USE

(30) Priorité: 07.03.2000 FR 0002936
(43) Date de publication de la demande: 04.12.2002
(73) Titulaire: SAINT-GOBAIN GLASS FRANCE, 92400 Courbevoie (FR)
(72) Inventeur: MARTIN, Dorothée, F-92150 Suresnes (FR); GY, René, F-93140 Bondy (FR); JOUSSE, Didier, F-95150 Taverny (FR)
(74) Mandataire: Cardin, Elise
(86) Numéro de dépôt international: PCT/FR2001/000680
(87) Numéro de publication internationale: WO 2001/066478

(56) Documents cités:
- WO-A-99/56302
- US-A- 3 342 753
- US-A- 4 961 026
- US-A- 5 675 212
- PETROVYKH N V: "CONDUCTING GLASS MATERIALS IN ENTERPRISES AND INSTITUTES" GLASS AND CERAMICS,US,CONSULTANTS BUREAU. NEW YORK, vol. 50, no. 11/12, 1 novembre 1993 (1993-11-01), pages 501-503, XP000452211 ISSN: 0361-7610

## Description

L'invention concerne un espaceur en verre, destiné à maintenir séparés deux substrats plans, et dont la composition verrière assure la pérennité de son « invisibilité », ou plus exactement de sa faible visibilité, lors de son utilisation.

Bien qu'elle ne soit pas limitée à de telles applications, l'invention sera plus particulièrement décrite en référence à des espaceurs utilisés pour maintenir un espace entre deux feuilles de verre dans la réalisation d'écrans à émission de champ, et donc pour maintenir un espace d'épaisseur limitée, généralement inférieure à quelques millimètres, sur toute la surface des feuilles de verre.

Une telle configuration est largement recherchée pour la réalisation d'écrans pour la visualisation, qu'elle qu'en soit la technologie. Il peut s'agir des écrans à émission de champ (FED) précités tels que des écrans à micropointes, ou des écrans à plasma. Une telle configuration peut être également recherchée pour la réalisation de vitrages sous vide ou de lampes planes. L'expression lampes planes doit être comprise comme englobant des lampes pouvant présenter une courbure sur au moins une partie de leur surface, quelle que soit par ailleurs la technologie de ces lampes.

En effet, dans un écran de type à émission de champ, un espace limité et dans lequel est fait le vide, doit être maintenu entre les deux feuilles de verre. Sur la feuille de verre de face avant, qui constitue l'anode, sont déposés les éléments émetteurs de lumière. Sur la face arrière, qui constitue la cathode, sont disposés des éléments émetteurs d'électrons qui sont accélérés vers les éléments émetteurs de lumière et viennent ainsi les exciter.

Il est connu, tel qu'il est décrit dans le document WO-81/01910, que ce type d'écran, plus particulièrement la feuille de verre extérieure, c'est-à-dire la feuille de verre qui est à la vue d'un observateur, doit présenter une transparence optique élevée.

Les espaceurs permettant de maintenir un espace entre les deux feuilles de verre doivent par conséquent être le moins visibles possible.

Il est connu de US-A-5 675 212 un espaceur en céramique, soit entièrement formé d'une céramique à conductivité électrique uniforme, soit constitué d'un coeur en céramique électriquement isolante et d'une couche externe électriquement conductrice, également en céramique.

Il a déjà été proposé selon le document EP-0 627 389 A, un procédé de fabrication d'un polyèdre en verre dans lequel un barreau primitif de section polygonale, avantageusement poli sur toutes ses faces latérales, est tout d'abord étiré puis découpé en plusieurs tiges, tiges qui après avoir été rassemblées, sont à leur tour découpées à la longueur désirée puis polies à leurs extrémités.

Cette technique est avantageuse dans la mesure où elle permet, à moindre coût, de réaliser des espaceurs en verre aux dimensions toutefois assez délicates, chacun de ces polyèdres en verre ayant des dimensions très faibles directement égales à celles requises par l'application visée.

En effet, dans le cas des écrans de visualisation, tels que les écrans à micropointes, les espaceurs doivent être mis en place de façon très précise sur des bandes séparatrices, ou « black matrix ». Ces bandes séparatrices sont prévues soit selon une direction, soit selon deux directions perpendiculaires pour délimiter les « pixels » de couleurs. La mise en place des espaceurs doit être effectuée de sorte que ceux-ci n'empiètent pas sur les zones de « pixels ».

Les espaceurs ainsi positionnés sur les bandes séparatrices ne doivent pas être visibles au travers de la feuille de verre extérieure, c'est-à-dire la feuille de verre qui est face à l'observateur notamment dans le cas d'un écran de visualisation.

Il apparaît tout de même qu'au cours de l'utilisation des écrans de visualisation, les emplacements des espaceurs deviennent visibles par apparition soit de zones brillantes soit de zones sombres autour desdits espaceurs. Dans le cas précis des écrans de visualisation, ce phénomène perturbe bien entendu la qualité de l'image et ne peut donc être toléré. Ce phénomène de brillance et/ou d'assombrissement autour des espaceurs est déjà connu et expliqué. En effet, ce phénomène est dû à l'implantation de charges au niveau de l'espaceur du fait du coefficient d'émission secondaire du matériau, défini par le rapport du nombre d'électrons secondaires réémis sur le nombre d'électrons primaires reçus ; un coefficient différent de 1 conduit à un effet de charge local qui selon qu'elle est positive ou négative conduit à un effet de brillance ou d'assombrissement, lié à la déviation de la trajectoire des électrons.

Les espaceurs réalisés en verre selon des compositions usuelles, présentant une conduction ionique, n'autorisent pas une évacuation des charges électroniques. En outre, ces compositions peuvent comporter des éléments qui migrent aisément sous l'influence d'un champ électrique ou sous l'effet de la température. Il est donc possible de voir apparaître des migrations d'éléments constitutifs de la matrice verrière durant par exemple la réalisation d'un écran du fait des cycles thermiques ou bien durant son utilisation du fait des champs électriques qui existent alors. Or la migration de ces éléments peut entraîner une pollution par exemple des micropointes dans le cas de ce type d'écran.

Une solution déjà proposée pour éviter cet inconvénient lié à un effet de charge local consiste à réaliser un dépôt en surface de l'espaceur pour obtenir une conduction électronique. Ce type de solution présente l'inconvénient d'être très onéreuse puisqu'elle nécessite un traitement de l'espaceur après sa fabrication. En outre, dans le cas d'espaceurs de formes complexes, les couches sont difficilement réalisables de façon homogène, notamment en terme d'épaisseur, et peuvent conduire à des irrégularités d'évacuation des charges ; il s'ensuit de nouveau des risques de claquage.

Une autre solution proposée dans WO-99 56 302 A consiste à avoir un espaceur en verre de forme polygonale dont une surface, de preférence latérale, présente une conduction électronique.

Par ailleurs, des verres conducteurs sont connus (voir US-A- 3 342 753 et PETROUYKH NV : "Conducting Glass Materials in Enterprises and Institutes"; Glass and Ceramics, US, Consultant Bureau; New York, vol. 50, no. 11/12, 1 novembre 1993, pp. 501-503, XP 00045 2211). Néanmoins, ils sont décrits pour d'autres usages que la fabrication d'espaceurs en verre invisibles destinés à maintenir espacés deux substrats.

Les inventeurs se sont ainsi donné pour mission de réaliser des espaceurs qui remplissent leur fonction de maintien entre par exemple deux substrats plans et qui restent peu visibles durant l'utilisation du produit pour lequel ils sont utilisés sans présenter les inconvénients, notamment en terme de coûts, des solutions existantes.

Ce but est atteint selon l'invention par un espaceur en verre, destiné à maintenir espacé deux substrats, dont la matrice verrière présente une conductivité électronique, en volume. Cette propriété de conductivité électronique des espaceurs, satisfaisante pour autoriser l'évacuation de charges, peut être mise en évidence par une expérience utilisant un microscope électronique à balayage. Cette expérience sur laquelle il sera revenu ultérieurement en détails montre dans le cas d'une conductivité électronique satisfaisante, qu'il n'apparaît aucune inhomogénéité de brillance sur l'image.

De façon préférée, la conductivité électronique est comprise entre 10⁻¹³ et 10⁻⁵ Ohm⁻¹.cm⁻¹, et de préférence comprise entre 10⁻¹² et 10⁻⁸ Ohm⁻¹.cm⁻¹, à 50°C.

La conductivité est mesurée sur des échantillons de verre d'une épaisseur de 1 mm en appliquant une tension entre deux électrodes en platine de dimensions 2x3 mm², apposées en regard l'une de l'autre, de part et d'autre des échantillons ; on a fait varier la tension continue appliquée entre -100 et 100 volts et on a observé une variation linéaire du courant avec la tension. En outre, les mesures ont été vérifiées pour des températures variant de 50 à 250 °C. La conductivité électronique est ensuite distinguée de la conductivité ionique soit par des mesures à différentes fréquences et à différentes températures, soit en observant l'évolution de la conductivité lorsque les échantillons sont soumis à une tension continue de 100 volts et à une température de 200°C. Dans le cas d'un échantillon conducteur ionique, on observe une rapide diminution de la conductivité en fonction du temps. Cette diminution de la conductivité est due à la mobilité les ions qui migrent facilement sous le champ électrique, par exemple des ions Na. En revanche, dans le cas d'un échantillon conducteur électronique, la conductivité est sensiblement stable en fonction du temps.

L'espaceur ainsi réalisé selon l'invention permet d'évacuer les charges qui apparaissent à sa surface. Un tel espaceur dont la conductivité électronique est obtenue dans la masse n'a donc pas subi de traitement ultérieur onéreux, tel qu'un dépôt de couche, pour obtenir cette propriété et est donc réalisé de façon plus économique que cela n'était connu auparavant.

Un tel espaceur a en outre ceci d'extrêmement avantageux que lorsque l'espaceur en verre est utilisé pour séparer deux feuilles de verre appartenant à un écran à émission de champs (FED), tout risque d'effet dit « de claquage » est évité. En effet, l'effet de claquage résulte d'une accumulation de charges et se produit entre les bornes d'un élément isolant. Or, l'espaceur selon l'invention, qui autorise l'évacuation des charges et ainsi établit un courant de fuite permet d'éviter tout risque de claquage. Cette conduction électronique des espaceurs présente également l'avantage d'éviter une charge électrostatique desdits espaceurs durant leur stockage. Les inventeurs ont également mis en évidence que des espaceurs, tels que ceux réalisés habituellement, ont une tendance à se charger facilement électrostatiquement durant leur stockage, ce qui rend délicates les opérations ultérieures de mise en place, par exemple sur un écran. Les espaceurs selon l'invention permettent d'éviter ce type d'inconvénient.

Par contre, pour des raisons de rendement énergétique, la puissance perdue par la conduction électronique des espaceurs doit rester inférieure à une valeur fixée ; elle est par exemple comprise entre 1 et 50 W/m² pour des écrans à micropointes.

Les espaceurs selon l'invention sont de préférence réalisés à partir d'une matrice verrière comprenant au moins 1% d'oxydes d'éléments de transition existant sous plusieurs degrés d'oxydation. La matrice verrière des espaceurs selon l'invention comporte avantageusement les constituants ci-après dans les proportions molaires suivantes :

| | |
|---|---|
| SiO₂ | 25 - 75 % |
| Al₂O₃ | 0 - 40 % |
| ZrO₂ | 0 - 10 % |
| R₂O | 0 - 10 % |
| R'O | 0 - 40 % |
| Oxydes d'éléments de transition existant sous plusieurs degrés d'oxydation | 1 - 30 % |

où R = Li, Na ou K,
et R' = Mg, Ca, Sr ou Ba.

Selon l'invention, par éléments de transition, on comprend les éléments de transition de la classification périodique. Ils comprennent notamment certaines terres rares pouvant exister sous plusieurs degrés d'oxydation.

SiO₂ est un oxyde formateur de réseau ; sa teneur sera avantageusement inférieure à 73% pour diminuer les températures de fusion et prévenir une dégradation trop rapide des réfractaires constituant le four. Par ailleurs, sa teneur sera de préférence inférieure à 55% lorsque l'on souhaite privilégier les propriétés mécaniques, notamment le module d'élasticité, des espaceurs qui seront réalisés. En dessous de 25%, la stabilité des verres devient insuffisante et les risques de dévitrification augmentent.

Al₂O₃ apporte à la matrice verrière un rôle stabilisant et permet notamment de limiter les risques de dévitrification, particulièrement pour de faibles teneurs en silice. Au delà de 5%, l'oxyde contribue avantageusement à améliorer les propriétés mécaniques, notamment le module d'élasticité, des espaceurs. Sa teneur est avantageusement inférieure à 35% et de préférence inférieure à 20% de sorte que la viscosité de la matrice verrière à haute température ne soit pas trop importante.

ZrO₂ comme Al₂O₃ permet d'augmenter la température de Strain Point, ce qui est important notamment pour les espaceurs destinés aux écrans qui subissent des traitements thermiques durant leur fabrication. Mais à la différence de Al₂O₃, cet oxyde n'augmente pas la viscosité de la matrice verrière à haute température. Sa teneur n'excède pas 10% et de préférence 8% pour simplifier la fusion et limiter les risques de dévitrification.

Concernant les oxydes alcalins, ceux-ci sont introduits dans la matrice verrière essentiellement pour les conditions d'élaboration du verre, et plus particulièrement pour maintenir la température de fusion et la viscosité à haute température dans des limites acceptables et pour améliorer l'homogénéisation de la composition lors de la fusion. Leur teneur est avantageusement maintenue en dessous de 10% et de préférence encore en dessous de 5%, du fait de leur mobilité qui pourrait perturber la conductivité électronique recherchée. Avantageusement, la présence de l'oxyde Li₂O est favorisée, lorsque des propriétés mécaniques, notamment le module d'élasticité, sont recherchées, les oxydes Na₂O et K₂O pouvant éventuellement être totalement absents de la matrice. Au contraire lorsque les contraintes économiques sont essentielles, l'oxyde Li₂O peut être absent de la matrice, cet oxyde étant plus onéreux que les autres. Une teneur en oxydes alcalins d'au moins 1% est avantageusement requise pour obtenir une adhésion du type « anodic bonding », adhésion sur laquelle il sera revenu par la suite.

Concernant les oxydes alcalino-terreux, ils sont introduits pour des raisons semblables à celles des oxydes alcalins et en outre, ils permettent d'améliorer la stabilité du verre vis à vis des risques de dévitrification et d'augmenter la température de Strain Point. Les oxydes MgO et CaO sont notamment favorisés lorsque l'on recherche un module d'élasticité élevé. Les oxydes lourds tels que SrO ou BaO sont notamment favorisés pour limiter la mobilité des ions alcalins et en conséquence diminuer la conductivité ionique et prévenir les risques de contamination par exemple des écrans par les ions alcalins.

L'invention prévoit encore de pouvoir introduire l'oxyde B₂O₃ dans des teneurs n'excédant pas 10% et avantageusement inférieures à 5% pour conserver des propriétés mécaniques satisfaisantes, et notamment un module d'élasticité satisfaisant. B₂O₃ permet notamment d'améliorer l'homogénéité de la composition lors de la fusion et diminue les températures de fusion de ladite composition, lorsqu'il se substitue à SiO₂. Il permet encore de diminuer la viscosité à haute température. Selon une autre variante de l'invention, la matrice verrière est de type borosilicate et la teneur en B₂O₃ est alors supérieure à 8% et de préférence supérieure à 10%.

L'oxyde P₂O₅ peut également être utilisé dans des teneurs n'excédant pas 5% pour notamment diminuer la viscosité à haute température sans trop dégrader les propriétés mécaniques, notamment le module d'élasticité, des espaceurs.

Les oxydes TiO₂ et ZnO peuvent encore être utilisés pour des raisons semblables à celles évoquées pour B₂O₃ et P₂O₅, notamment en terme de régulation des paramètres de fusion des compositions de verre. Leur présence sera particulièrement favorisée lorsque l'on souhaite obtenir des propriétés mécaniques, et notamment un module d'élasticité, renforcées.

Les oxydes d'éléments de transition sont des oxydes des éléments de transition choisis notamment parmi les éléments suivants : Ti, V, Cr, Mn, Fe, Co, Ni, Cu, Nb, Mo, W, Ta, Re, Ru, Os, Rh, Ir. La somme de leurs teneurs est avantageusement prévue supérieure à 5%. L'invention prévoit également l'introduction d'oxydes de terres rares pouvant exister sous plusieurs degrés d'oxydation, telles que notamment Ce, Pr, Nd, Sm, Eu, Tb, Dy, Tm, Yb.

Le contrôle du rédox du verre, c'est-à-dire des proportions respectives en chacun des degrés d'oxydation possibles de chacun des cations, est réalisé par contrôle de la nature plus ou moins réductrice de l'atmosphère de fusion, par la température du bain de fusion, éventuellement par l'insertion d'éléments réducteurs tels que coke ou autre, par exemple un gaz, dans le bain de fusion. Ce contrôle du rédox va notamment permettre de maîtriser la conduction électronique pour qu'elle autorise une évacuation des charges tout en limitant les pertes énergétiques. En outre, dans un souci d'amélioration du rendement énergétique, il est prévu avantageusement selon l'invention de limiter, voire d'annuler, la conduction électronique des espaceurs à coeur, en ne préservant qu'une conduction électronique de surface. Un tel résultat peut être obtenu selon l'invention de la façon suivante ; la fusion de la matrice verrière est réalisée sous atmosphère oxydante de telle manière que tous les éléments de transition présents soient dans leur degré d'oxydation le plus grand. Puis lors de la transformation en espaceur ou bien une fois l'espaceur obtenu, les faces de celui-ci sont rendues conductrices par un recuit sous atmosphère réductrice. Le type d'atmosphère réductrice, la température et la durée du recuit vont permettre de réguler la valeur de la conductivité électronique ainsi que l'épaisseur superficielle dans laquelle aura lieu le transport électronique.

L'ajout d'éléments de transition peut selon l'invention présenter un autre avantage. En effet, lorsque ces éléments de transition présentent un fort pouvoir de coloration, par exemple dans le cas des éléments Fe et Cr, il est possible d'obtenir un aspect noir, au moins en ce qui concerne la section des espaceurs vue à travers le substrat sur lesquels ils sont déposés. Cet aspect noir peut permettre dans le cas de certains écrans, de considérer l'espaceur comme un élément constitutif du « black matrix », c'est-à-dire du réseau noir qui défini les pixels et qui correspond à la zone où les espaceurs sont fixés. En effet, il est alors possible de fixer les espaceurs directement sur les substrats sans matériau de "collage" intermédiaire. Une première possibilité est alors d'insérer les espaceurs dans le « black matrix » dans lequel est évidée au préalable une zone, par exemple par photolithographie pour dégager une empreinte de dimensions à peine supérieures à celles de l'espaceur. Cette opération peut suffire à solidariser l'espaceur avec le substrat dans la mesure ou les inventeurs ont observé qu'un collage moléculaire résulte de la mise en contact des extrémités polies de l'espaceur avec la surface polie feu du substrat, à tel point que les espaceurs ne se décrochent pas lors d'un retournement du substrat. Une seconde possibilité, éventuellement mise en oeuvre simultanément avec la précédente, consiste à fixer l'espaceur au substrat par "anodic bonding", c'est-à-dire à appliquer un champ électrique et une température donnés pour établir un lien chimique entre les deux matériaux, dans la mesure ou des ions alcalins sont présents dans la matrice verrière de l'espaceur.

D'autres éléments supplémentaires peuvent être présents dans la matrice verrière, avec des teneurs inférieures à 1%. Ils sont introduits par exemple pour faciliter la fusion et l'affinage (As, Sb, F, Cl, SO3,...), ou bien alors ils sont introduits sous forme d'impuretés dans les matières premières utilisées ou d'impuretés provenant de l'usure des réfractaires.

L'espaceur ainsi défini selon l'invention présente une résistance au passage du courant, entre par exemple deux feuilles de verre, comprise entre 10⁻⁵ GΩ et 10⁻⁷ GΩ, de préférence entre 10⁻⁵ GΩ et 200 GΩ, de préférence encore entre 0,1 GΩ et 200 GΩ, de préférence encore entre 0, 5 GΩ et 200 GΩ, et de préférence encore entre 1 GΩ et 100 GΩ et avantageusement égale à 10 GΩ. De tels espaceurs vont ainsi permettre une évacuation des charges et prévenir toute apparition de zones de brillance ou d'assombrissement.

Selon une variante avantageuse de l'invention, la matrice verrière constituant l'espaceur présente un module d'élasticité d'au moins 90 GPa. Une telle caractéristique physique des espaceurs leur confère des propriétés mécaniques satisfaisantes pour être utilisés entre deux substrats plans pour les applications déjà énoncées précédemment telles que par exemple la réalisation d'écrans ou de lampes planes. En effet, les inventeurs ont su mettre en évidence que le module d'élasticité est la propriété des espaceurs, notamment lorsque ceux-ci sont réalisés selon le procédé décrit dans le document EP 0 627 389 A, qui détermine la résistance mécanique des espaceurs lorsque ceux-ci sont soumis à la pression exercée par les substrats plans, formant par exemple un écran, entre lesquels un vide est réalisé. Il était jusque là d'usage de penser, tel que l'illustre le document US 5,675,212, que le facteur prépondérant déterminant la résistance des espaceurs en verre pour ces applications était la présence de micro-fissures en surface des espaceurs. Ainsi, les inventeurs ont mis en évidence que notamment dans le cas des espaceurs réalisés selon le procédé décrit dans le document EP 0 627 389 A, les propriétés mécaniques de l'espaceur dépendent directement de son instabilité élastique et donc de son module d'élasticité ; ils interprètent ce phénomène par un état de surface particulièrement remarquable des espaceurs après fabrication selon ce procédé, sans aucune autre intervention ; c'est-à-dire que les espaceurs réalisés selon ce procédé sont exempts de défauts pouvant conduire à une rupture lorsqu'ils sont soumis aux contraintes liés à leurs applications.

Il faut noter que cette caractéristique concernant le module d'élasticité est présentée en association avec la conductivité électronique de la matrice verrière, notamment parce qu'elle présente des avantages particuliers pour cela tel qu'il le sera expliqué ultérieurement. Mais cette caractéristique concernant le module d'élasticité est particulièrement intéressante en tant que telle, indépendamment de la conductivité électronique, également pour des applications concernant de tels espaceurs. Notons encore que cette caractéristique concernant le module d'élasticité est également intéressante pour d'autres applications, c'est-à-dire pour réaliser des produits en verre autre que des espaceurs.

Des valeurs de module d'élasticité pouvant atteindre 140 GPa peuvent être obtenus selon l'invention par l'introduction de terres rares dans la matrice verrière. De préférence la somme des teneurs en oxydes de terres rares est supérieure à 1% et avantageusement n'excède pas 25%. Les oxydes de terres rares sont de préférence choisis parmi les suivants : Y₂O₃, La₂O₃, Ce₂O₃, Pr₂O₃, Nd₂O₃, Sm₂O₃, Eu₂O₃, Gd₂O₃ ,Tb₂O₃, Dy₂O₃, Ho₂O₃, Er₂O₃, Tm₂O₃, Yb₂O₃, Lu₂O₃.

L'invention prévoit encore avantageusement d'introduire de l'azote dans la matrice verrière. Cette introduction permet selon l'invention d'obtenir des modules d'élasticité supérieur à 140 GPa et pouvant atteindre 180 GPa. L'introduction d'azote peut être obtenue durant la fusion en effectuant celle-ci sous atmosphère neutre ou réductrice par exemple d'argon, d'azote ou d'un mélange d'azote et d'hydrogène. L'azote est alors introduit dans les matières premières sous forme de Si₃N₄, AlN, BN. L'azote présente également l'avantage de pouvoir obtenir une coloration noire des espaceurs.

L'augmentation du module d'élasticité selon l'invention permet tout d'abord une réalisation sans risque de casse, dû à l'instabilité élastique, dans la réalisation des écrans, lampes ou vitrages contenant ces espaceurs. Cette diminution du risque de casse est particulièrement notable dans le cas des écrans FED dans lesquels les espaceurs sont habituellement minces, et notamment présentant une épaisseur inférieure à 80 microns.

En outre, lorsque le module d'élasticité est suffisamment important, il devient possible d'envisager, par exemple dans le cas de substrats épais, c'est-à-dire présentant une épaisseur supérieure à 3 mm, ou de substrats renforcés, notamment par traitement chimique, de réduire le nombre d'espaceurs mis en place par unité de surface pour garantir la tenue mécanique nécessaire. Une telle diminution du nombre d'espaceurs par unité de surface conduit avantageusement à une économie lors de la réalisation par exemple d'un écran de visualisation. En outre, cette diminution du nombre d'espaceurs par unité de surface permet de pouvoir augmenter la conductivité des espaceurs puisque leur nombre diminuant, la perte énergétique globale peut être maintenue à une valeur acceptable tout en augmentant la perte de chaque espaceur pris individuellement ; on améliore ainsi encore le rôle de la conductivité électronique, c'est-à-dire d'éviter les phénomènes d'accumulation de charges.

Par ailleurs, si les inventeurs ont mis en évidence que le module d'élasticité est plus important que la présence de micro-fissures en terme de tenue mécanique, il est connu que la géométrie de l'espaceur a une incidence sur sa résistance notamment à l'écrasement. Selon les applications envisagées, les espaceurs se divisent en deux familles. Il existe tout d'abord des espaceurs que l'on peut qualifier de « piliers » (ou « pillars ») ; leur utilisation est fréquente pour les écrans de visualisation et les vitrages sous vide et lampes planes. Il existe ensuite des espaceurs que l'on peut qualifier de « bandes » (ou « ribs »), parce que plus allongés ; leur utilisation est fréquente pour les écrans de visualisation.

Concernant la première famille d'espaceurs, c'est-à-dire ceux de type pilier, ils présentent avantageusement selon l'invention la forme d'un prisme droit dont la section est un polygone orthogonal et de préférence dont la section est cruciforme.

Les espaceurs dont les matrices verrières ainsi définies comportent notamment des éléments tels que les terres rares, du fer, des alcalino-terreux dans des proportions inhabituelles par rapport à des compositions plus classiques présentent des densités élevées, notamment supérieures à 3. De telles densités présentent l'avantage de faciliter la manipulation et la mise en place des espaceurs. En effet, la tendance est à la miniaturisation des espaceurs avec un poids unitaire qui peut être inférieur à 0,25 mg et pouvant atteindre 0,09 mg. Ce poids faible génère de multiples problèmes ; tout d'abord, lors de la fabrication des espaceurs, les espaceurs doivent être contrôlés individuellement et placés dans une matrice servant à l'expédition. Pour cela , des robots munis de pince de préhension sont utilisés et un poids plus élevé de l'espaceur facilite sa libération. D'autre part, lors du placement par les fabricants d'écrans, de lampes planes ou de vitrage sous vide, une manipulation individuelle comme précédemment peut être mise en oeuvre ou bien un outil de placement collectif est utilisé avec une étape préalable qui permet d'amener les espaceurs dans des empreintes prédéterminées. Les forces de gravité interviennent systématiquement lors de ces étapes de mise en place et une augmentation de la densité est toujours favorable. Son incidence sur le poids final du produit restera marginale, au maximum de quelques grammes puisque la densité d'espaceurs se situe généralement entre 500 et 10 000 par m².

Il faut noter que cette caractéristique concernant la densité élevée des espaceurs est présentée en association avec la conductivité électronique et/ou avec le module d'élasticité de la matrice verrière, notamment parce qu'elle présente des avantages particuliers pour cela tel qu'il l'a été expliqué précédemment. Mais cette caractéristique concernant la densité est particulièrement intéressante en tant que telle, indépendamment de la conductivité électronique et/ou du module d'élasticité, également pour des applications concernant de tels espaceurs. En outre, l'invention ne doit pas être comprise comme étant limitée à l'ajout des oxydes précités pouvant augmenter sa densité mais s'étend à tout élément supplémentaire pouvant contribuer à l'augmentation de la densité des espaceurs.

Selon une réalisation avantageuse de l'invention, la matrice verrière présente une température correspondant au Strain Point, c'est-à-dire une température en deçà de laquelle le verre n'a plus de comportement visqueux, supérieure à 530°C et de préférence supérieure à 550°C. De telles valeurs permettent de rendre compatibles les espaceurs avec les températures auxquelles sont soumis par exemple les écrans à micropointes durant leur fabrication, notamment lors du scellement périphérique.

De façon avantageuse également, la matrice verrière selon l'invention présente un coefficient de dilatation, mesuré entre 20 et 300°C, compris entre 60 et 95.10⁻⁷ K⁻¹, de préférence compris entre 80 et 95.10⁻⁷ K⁻¹ et de préférence encore supérieur à 85.10⁻⁷ K⁻¹. De tels coefficients de dilatation permettent de rendre compatibles les espaceurs avec les autres éléments constitutifs par exemple des écrans tels que les substrats ou les couches déposées sur ces substrats. De telles valeurs de coefficient de dilatation sont particulièrement intéressantes dans le cas des espaceurs du type « ribs ». Dans le cas de matrices verrières de type borosilicates, le coefficient de dilatation peut être compris entre 30 et 50.10⁻⁷ K⁻¹.

De telles compositions peuvent aisément être fondues et transformées en espaceur, notamment selon la technique décrite dans le document EP-0 627 389 A. Ce document décrit un procédé qui consiste à étirer un barreau primitif ou tige de verre qui présente une section de forme sensiblement identique à celle que l'on veut obtenir à un rapport homothétique près. Ce barreau primitif qui a une taille suffisamment importante peut être usiné selon la section voulue, avec une grande précision. De plus, ce barreau primitif peut être initialement poli sur ses faces latérales. Cette étape d'étirage se fait avec une élévation de la température du barreau primitif à une température proche de sa température de ramollissement et l'étirage proprement dit peut être alors réalisé en une ou plusieurs étapes.

La tige étirée obtenue après étirage du barreau primitif présente une section de forme semblable à celle du barreau primitif à un rapport homothétique près, qui correspond à la section des espaceurs désirés. Par ailleurs, la tige présente un aspect poli sur ses faces latérales du fait du passage à température élevée qui crée un « poli au feu » . Ce phénomène peut permettre d'utiliser non pas un barreau primitif poli sur ses faces latérales mais présentant un autre aspect tel qu'un aspect « douci fin ». Par « poli au feu », l'invention fait référence à une rugosité de surface (« RMS value ») inférieure à 5Å par mesure AFM (microscope à force atomique) sur une surface balayée d'environ 6µm². De préférence, cette rugosité est de l'ordre de 2Å. Comme énoncé précédemment, les inventeurs ont su mettre en évidence que le « poli feu » des faces de l'espaceur ainsi obtenu conduit à définir la résistance mécanique desdits espaceurs par leur limite élastique et non pas par la présence de micro-fissures comme pouvait le penser l'homme du métier. En outre, les inventeurs ont également mis en évidence que les rugosités ainsi obtenues selon ce procédé contribuent également à une diminution des risques de claquage électrique ; en effet, l'amorce de claquage est favorisé par des surfaces présentant des aspérités de faibles rayons de courbures.

Les tiges sont ensuite rassemblées parallèlement les unes aux autres. De préférence, ces tiges sont rassemblées dans un cylindre notamment en verre, et sont solidarisées à l'aide d'un liant tel qu'une cire ou colle.

L'ensemble des tiges est ensuite découpé à la longueur désirée pour qu'elles forment les espaceurs souhaités.

La longueur étant obtenue, l'ensemble des espaceurs peut être douci puis poli aux deux extrémités. Il est ainsi possible d'obtenir des espaceurs polis sur toutes leurs faces. De plus, si la découpe n'est pas très précise, il est ainsi possible de rectifier la longueur des espaceurs lors du polissage. On obtient ainsi des arêtes franches, exemptes de défauts tels que par exemple des écailles, qui pourraient diminuer la résistance mécanique des espaceurs. Ce polissage présente également un intérêt pour diminuer les risques de claquage pour les mêmes raisons que celles évoquées précédemment concernant les autres faces. En outre, l'état de ces sections va permettre un meilleur contact des espaceurs avec les couches déposées sur les substrats plans et peut ainsi éventuellement éviter la présence d'une couche métallique intermédiaire habituellement prévue pour garantir un meilleur contact. Ces états de surface autorisent en outre avantageusement un collage moléculaire par mise en contact direct des espaceurs sur le substrat.

Les espaceurs sont ensuite désolidarisés les uns des autres notamment par fusion du liant, ou par dissolution chimique.

Le procédé ainsi décrit permet d'obtenir les espaceurs avec des dimensions précises et à moindre coût. En effet, les opérations manuelles exécutées par un opérateur, sont très limitées. D'une part, cela diminue les coûts de production et d'autre part, les opérations conduisant aux dimensions n'étant pas manuelles sont à la fois précises et régulières.

Selon une variante de réalisation de ces espaceurs, les tiges ne sont pas découpées à la longueur désirée et celles-ci constituent en quelque sorte un « stock » d'espaceurs liés les uns aux autres. Selon un premier mode de réalisation de cette variante, les espaceurs peuvent être commercialisés ou livrés sous la forme de bobines ou rouleaux constitués de la tige non découpée.

Selon un second mode de réalisation de cette variante, la tige comporte des entailles transversales qui délimitent les espaceurs. De telles entailles sont par exemple obtenues par un outil mécanique du type diamant de préférence rotatif, placé sous le mécanisme d'étirage.

Ces entailles possèdent avantageusement une forme d'indentation. Elles peuvent avoir une profondeur au plus égale à 30% de la largeur minimale de la section polygonale. Cette profondeur peut être au plus égale à 20 µm, et de préférence à 10 µm. La largeur d'une entaille est avantageusement inférieure à 20 µm.

Cette seconde variante de réalisation est notamment intéressante pour des applications pour lesquelles les espaceurs n'ont pas la nécessité d'être polis sur toutes leurs faces, et plus précisément sur les sections de découpes.

Les espaceurs selon l'invention peuvent encore être réalisés selon une méthode d'extrusion ou une méthode de pultrusion. La première méthode consiste à réaliser la préforme nécessaire avant étirage selon des techniques d'extrusion et à étirer ladite préforme selon la technique décrite précédemment. La pultrusion consiste à réaliser un étirage de la préforme directement en sortie d'une extrudeuse. Selon ces techniques, il apparaît qu'il est inutile d'effectuer un polissage des faces de la préforme tout en conservant un aspect poli satisfaisant des faces des espaceurs après étirage.

Par ailleurs, les espaceurs obtenus selon ces méthodes de fabrication sont tels que, par exemple dans le cas d'une section polygonale, les sommets de la section sont, du fait du procédé d'étirage, arrondis avec un rayon de courbure compris entre 2 et 10 microns et de préférence compris entre 5 et 10 microns. Ces sommets arrondis permettent notamment pour certaines applications de limiter les risques de dégradations des feuilles de verre et éventuellement des couches déposées à leurs surfaces en cas de glissement, par exemple lors de la mise en place desdits espaceurs.

Le procédé de pultrusion autorise en outre la suppression d'une étape intermédiaire et notamment de stockage de préformes, une alimentation en continu de l'extrudeuse conduisant à une fabrication continue des espaceurs pour une section donnée. Un dernier avantage de ce procédé de pultrusion est d'autoriser un meilleur contrôle de l'orthogonalité des branches, par exemple dans le cas d'une section cruciforme.

Selon une variante de réalisation de l'invention, l'espaceur est avantageusement au moins partiellement diffusant de la lumière ; l'effet diffusant peut avantageusement être obtenu par dépolissage au moins partiel des surfaces de l'espaceur.

Une telle propriété de diffusion présente un avantage par exemple pour des utilisations dans des lampes planes ou des vitrages isolants sous vide. Dans le cas des écrans de visualisation, cette propriété peut permettre d'éviter des réflexions parasites sur les espaceurs, lesdites réflexions pouvant provoquer un mélange de couleurs générées par les pixels.

L'aspect dépoli peut par exemple être obtenu par une attaque acide dans un bain de fluorure d'ammonium et d'acide chlorhydrique. Le traitement peut être effectué à différents stades du procédé de fabrication en fonction des zones que l'on souhaite dépolir. Il peut être effectué sur la tige après étirage de sorte que l'on garde des sections polies ; il peut être effectué après obtention des espaceurs de façon à dépolir l'intégralité de leurs surfaces ; il peut encore être effectué à un stade intermédiaire, c'est-à-dire après mise à longueur des espaceurs mais lorsque ceux-ci sont encore noyés dans un liant de façon à ne dépolir que les sections desdits espaceurs. Les surfaces ainsi dépolies présentent un fin relief constitué d'une juxtaposition d'une sorte de petites pyramides qui font un effet de piège à lumière.

Les espaceurs ainsi décrits selon l'invention sont particulièrement adaptés à des utilisations pour la réalisation d'écrans de visualisation, tels que des écrans plasma ou à micropointes, ou bien la réalisation de vitrages isolants sous vide ou de lampes planes.

En outre, il apparaît que les compositions de verre décrites pour la réalisation de ces espaceurs peuvent être utilisées pour toute application où il est nécessaire d'évacuer des charges au travers d'un produit en verre et/ou un module d'élasticité tel que le décrit l'invention est nécessaire.

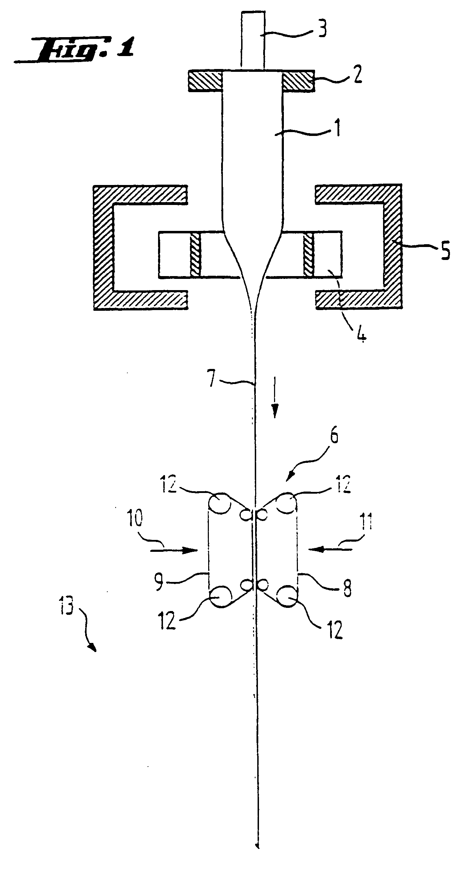

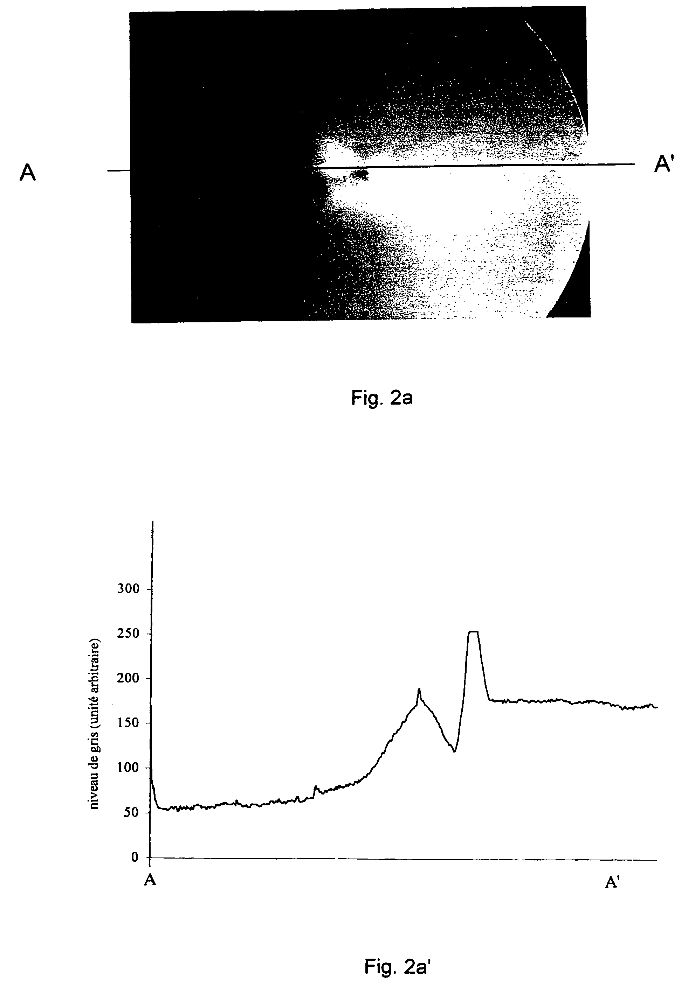

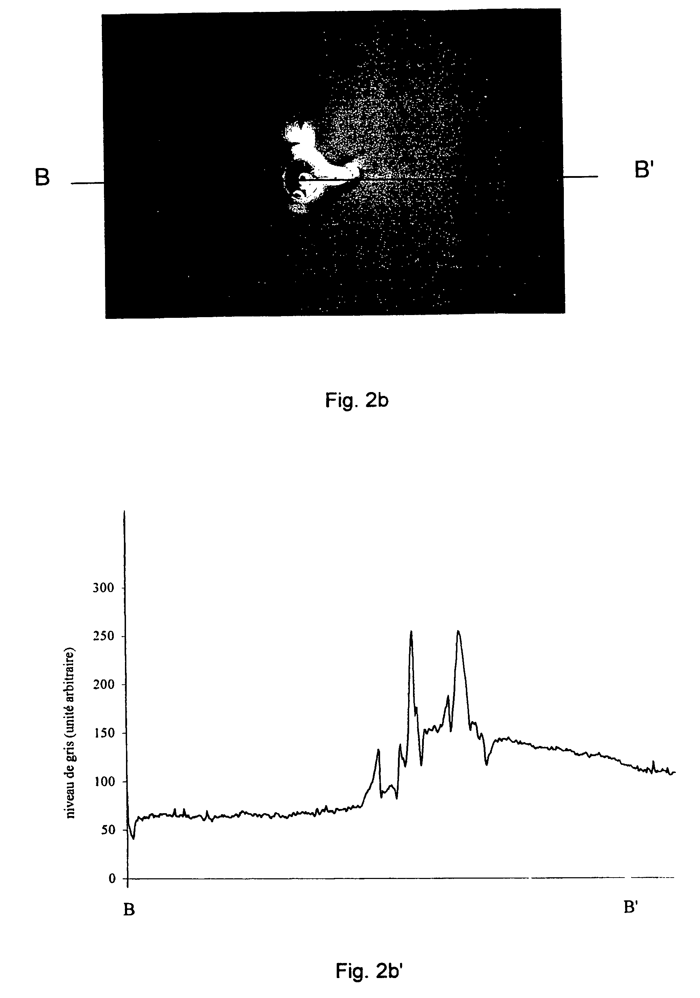

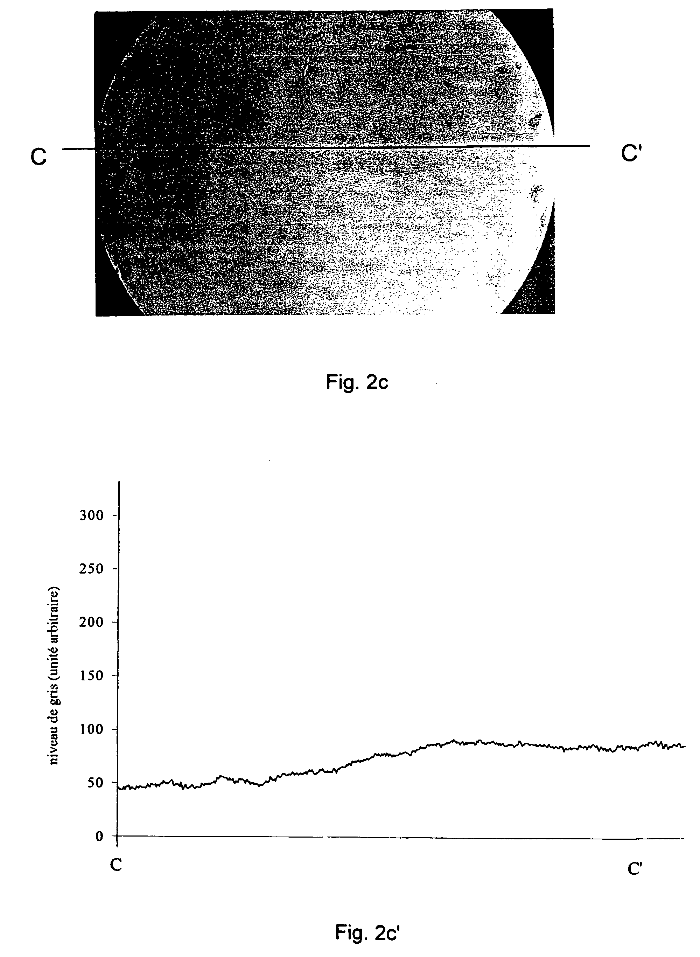

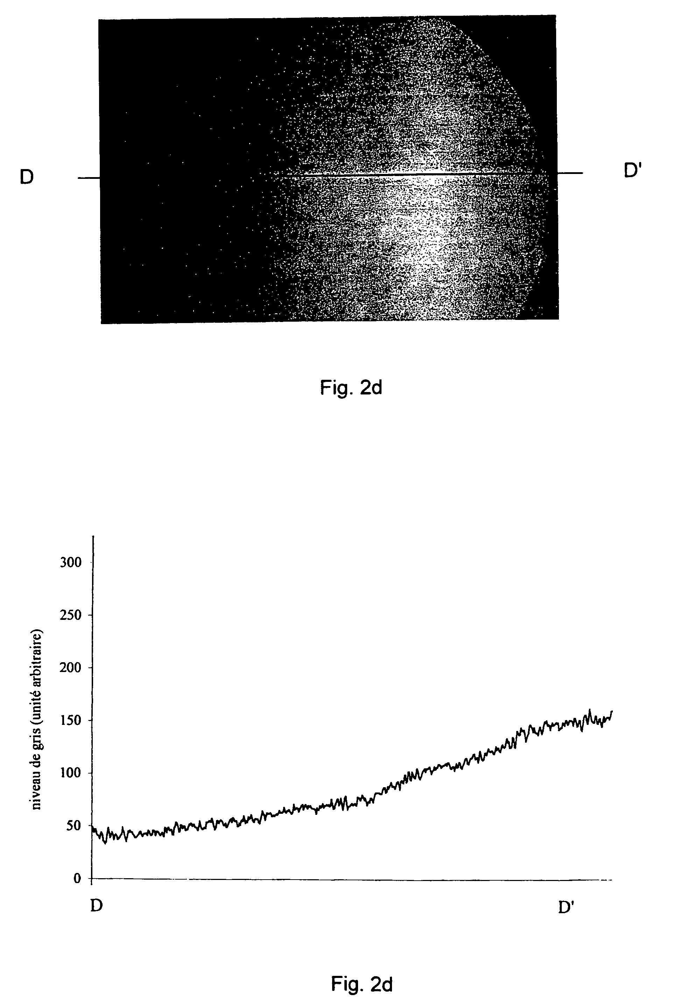

D'autres détails et caractéristiques avantageuses de l'invention ressortiront ci-après de la description d'exemples réalisés selon l'invention et de la description des figures 1 et 2 à qui représentent respectivement :
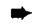 Figure 1 : un schéma d'un dispositif pour la réalisation d'espaceurs selon l'invention,
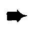 Figures 2 a, b, c et d : des images prises avec un microscope électronique à balayage illustrant la conduction électronique de différents échantillons selon l'invention (figures 2c et 2d) et de référence (figures 2a et 2b).
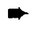 Figures 2 a', b', c' et d' : des profils de niveau de gris obtenus à partir des images représentées sur les figures 2 a, b, c et d et passant par AA' , BB', CC' et DD', respectivement.

La figure 1 n'est pas réalisée à l'échelle pour en simplifier la compréhension.

La figure 1 représente le schéma d'une installation pour la réalisation d'espaceurs selon l'invention.

Un barreau primitif 1, dans le cas présent de section rectangulaire, dont les dimensions sont également données dans le tableau ci-après, est fixé à un support 2.

Le support 2 est lui-même fixé à un système mécanique. Ce système mécanique 2, qui peut être par exemple une vis sans fin permet de donner un mouvement vertical descendant au barreau primitif 1 selon l'axe 3 qui peut ainsi passer au travers d'un anneau chauffant 4, de hauteur environ égale à 70 millimètres.

Cet anneau chauffant 4, représenté à la figure 2, est chauffé par effet Joule en basse tension et est de forme légèrement ovale. Cela permet une meilleure répartition de la chaleur autour du barreau primitif au point que la régulation en température est faite à plus ou moins 0,1 degré à 800°C.

L'anneau chauffant 4 est entouré d'un réfractaire d'isolation 5. Placé sous l'anneau chauffant à une distance d'environ 500 millimètres, un dispositif d'étirage 6 permet l'étirage du barreau primitif 1 de manière à obtenir une tige ou fibre de verre 7.

Le dispositif 6 se compose de deux courroies motrices 8, 9 sur lesquelles s'exercent des forces de pression latérales 10, 11. Ces forces de pression 10, 11 favorisent l'étirage et sont exercées par l'intermédiaire de moyens non représentés qui sont par exemple des vérins hydrauliques de petites dimensions à pression réglable.

La vitesse d'étirage est directement liée à la vitesse de rotation des galets 12 qui entraînent chacune des deux courroies motrices 8, 9.

Les courroies motrices 8, 9 sont réalisées en un matériau, par exemple du silicone, permettant d'éviter le glissement sur le verre et donc d'obtenir un étirage régulier.

Selon le procédé d'étirage, il est possible de conserver quasiment le même profil c'est-à-dire le même profil de section entre le barreau primitif 1 et la tige de verre 7, avec un rapport homothétique entre les deux.

Des espaceurs conforme à l'invention ont ainsi pu être réalisés selon ce procédé de fabrication.

Différents espaceurs ont ainsi été réalisés selon l'invention et leurs compositions, exprimées en pourcentage molaire, apparaissent dans le tableau qui suit. Les exemples 1, 2 et 5 sont des exemples comparatifs qui permettent de mieux comprendre les avantages des compositions selon l'invention.

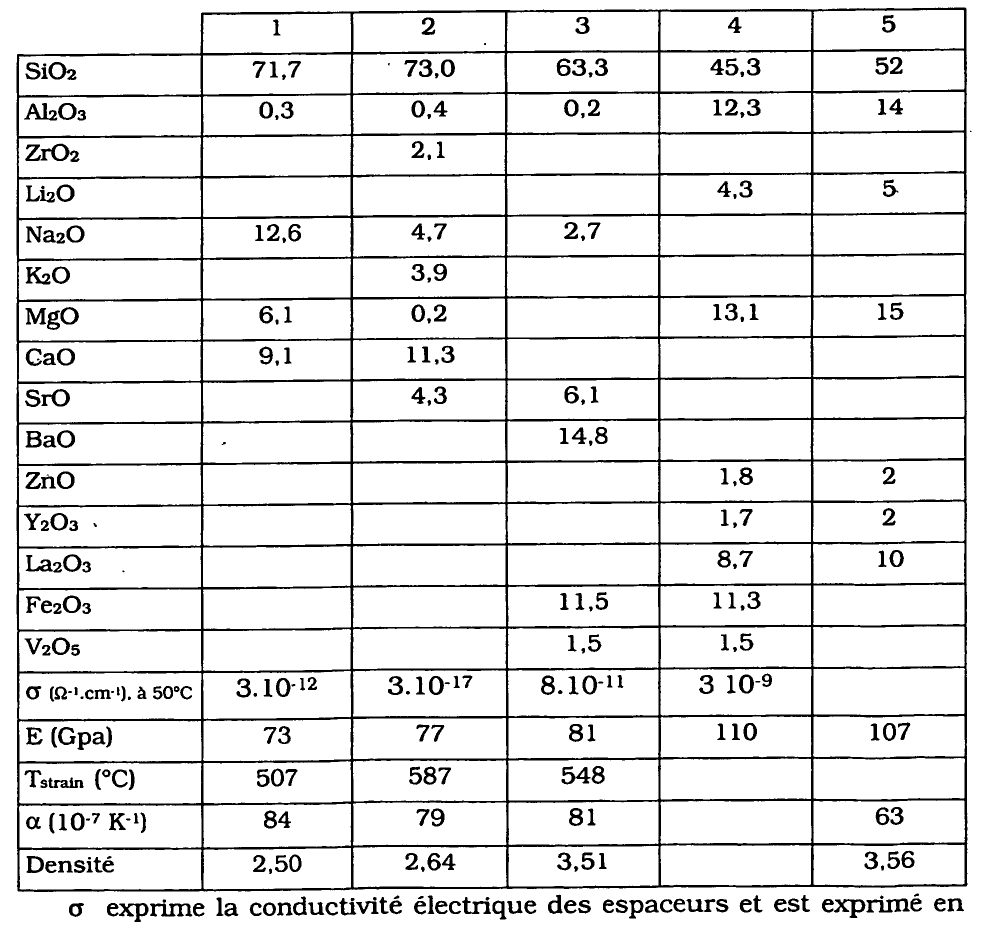

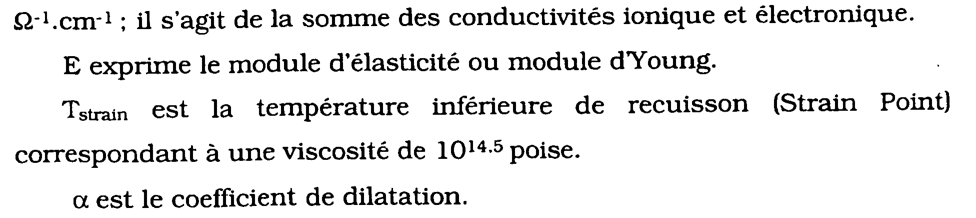

Le module d'élasticité a été mesuré par flexion quatre points sur des éprouvettes, de dimensions 100x10x4 mm³, réalisées à partir des compositions selon l'invention. Les barreaux dans lesquels ont ensuite été taillées les éprouvettes, ont d'abord subi un recuit d'une heure à une température correspondant à une viscosité de 10¹³ poise puis ont été ramenés à température ambiante à raison de 2°C/mn.

De façon à comparer les propriétés des différents verres concernant leur aptitude à évacuer des charges de nature électronique, la mesure suivante a été opérée ; cette mesure met en évidence la conductivité électronique des espaceurs réalisés avec ces verres. Elle consiste à placer une pastille de diamètre 10mm, d'épaisseur 1mm, usinée dans le verre que l'on souhaite caractériser. Cette pastille est insérée dans la chambre d'analyse d'un Microscope Electronique à Balayage, sur un porte échantillon métallique relié à la masse. Un premier balayage est réalisé à fort grandissement (x 20000), avec des électrons de grande énergie (31 keV), pendant 3 minutes. On réalise ensuite une image à faible grandissement (x 10) et à faible énergie (1 keV) de la zone ainsi bombardée. Si le verre évacue difficilement les charges, la zone bombardée a un aspect brillant caractéristique de l'effet de charge. Dans les cas les plus critiques, on observe même un effet connu par l'utilisateur de microscopie électronique sous le nom d'« effet miroir » : au moment de réaliser l'image, les électrons incidents sont réfléchis par le champ électrostatique généré par les électrons implantés lors du bombardement à haute énergie et qui n'ont pu être évacués par le verre. De ce fait, les électrons incidents ne pénètrent pas l'échantillon mais viennent faire une image du canon à électrons. Cette observation est caractéristique d'un échantillon qui évacue très difficilement les charges de nature électronique. Dans le cas où le verre évacue facilement les charges, aucune inhomogénéité de brillance n'est observable sur l'image.

Les résultats obtenus pour les différents échantillons sont présentés sur les figures 2a, 2b, 2c et 2d, qui représentent respectivement les résultats obtenus pour les exemples 1, 2, 3 et 4.

Les figures 2a et 2b, qui correspondent aux exemples de référence montrent que des espaceurs réalisés à partir de telles compositions sont mauvais conducteurs électroniques, chacune des photos montrant un effet de brillance, la figure 2b mettant en évidence l' « effet miroir » précédemment évoqué. La figure 2a montre par ailleurs que même une conductivité ionique relativement élevée (3.10⁻¹² Ω⁻¹.cm⁻¹) n'est pas satisfaisante pour permettre une évacuation des charges. Les inhomogénéités de brillance dues à l'évacuation insuffisante des charges se traduisent par l'existence de pics sur les profils des figures 2a' et 2b'.

Au contraire les figures 2c et 2d qui sont représentatives des compositions selon l'invention montrent que des espaceurs réalisés à partir de ces compositions présentent une conduction électronique. Les profils de niveau de gris des figures 2c' et 2d' laissent apparaître un fond continu exempt de pics.

Les espaceurs ainsi réalisés selon l'invention, qui présentent une conductivité électronique satisfaisante, permettent ainsi d'éviter une accumulation de charges sur lesdits espaceurs et pouvant nuire à la qualité du produit, par exemple un écran de visualisation, réalisé. En outre, dans le cas d'une amélioration des propriétés mécaniques et plus précisément du module d'élasticité telle que le propose l'invention, il est possible de limiter le nombre d'espaceurs et ainsi de rendre possible une plus grande conduction électronique des espaceurs, et donc une qualité du produit toujours meilleur, tout en conservant des pertes énergétiques acceptables.

L'exemple 5, comparatif, correspond à une composition permettant d'obtenir un module d'élasticité élevé, sans par contre posséder une conductivité électronique satisfaisante pour les applications envisagées précédemment. Une telle composition présente un intérêt pour d'autres applications des espaceurs qui ne nécessitent pas d'avoir la conductivité électronique visée par la presente invention.

## Revendications

1. Espaceur en verre, destiné à maintenir espacé deux substrats, **caractérisé en ce que** sa matrice verrière présente une conductivité électronique, en volume, comprise entre 10⁻¹³ et 10⁻⁵ ohm⁻¹.cm⁻¹.

2. Espaceur en verre selon la revendication 1, **caractérisé en ce que** sa matrice verrière comprend au moins 1% d'oxydes d'éléments de transition existant sous plusieurs degrés d'oxydation.

3. Espaceur selon la revendication 2, **caractérisé en ce que** la matrice verrière comprend les constituants ci-après dans les proportions molaires suivantes :
| | |
|---|---|
| SiO₂ | 25 - 75 % |
| Al₂O₃ | 0 - 40 % |
| ZrO₂ | 0 - 10 % |
| R₂O | 0 - 10 % |
| R'O | 0 - 40 % |
| Oxydes d'éléments de transition existant sous plusieurs degrés d'oxydation | 1 - 30 % |
où R = Li, Na ou K,
et R' = Mg, Ca, Sr ou Ba.

4. Espaceur selon l'une des revendications précédentes, **caractérisé en ce que** la matrice verrière comprend l'oxyde Li₂O avec une teneur supérieure à 1%.

5. Espaceur selon l'une des revendications 2 à 4, **caractérisé en ce que** la somme des oxydes d'éléments de transition présents dans la matrice verrière est supérieure à 5%.

6. Espaceur selon l'une des revendications 1 à 5, **caractérisé en ce qu'**il présente un module d'élasticité d'au moins 90 GPa.

7. Espaceur selon la revendication 6, **caractérisé en ce que** la matrice verrière comprend des oxydes de terres rares avec une teneur molaire comprise entre 1 et 25% et/ou de l'azote.

8. Espaceur selon l'une des revendications précédentes, **caractérisé en ce qu'**il présente une densité supérieure à 3.

9. Espaceur selon l'une des revendications précédentes, **caractérisé en ce qu'**il présente la forme d'un prisme droit dont la section est un polygone orthogonal et de préférence dont la section est cruciforme.

10. Espaceur selon l'une des revendications précédentes, **caractérisé en ce qu'**il présente une résistance électrique au passage du courant comprise entre 10⁻⁵ GΩ et 10⁷ GΩ, de préférence entre 10⁻⁵ GΩ et 200 GΩ, de préférence encore entre 0,1 GΩ et 200 GΩ, de préférence encore entre 1 GΩ et 100 GΩ et de préférence encore égale à 10 GΩ.

11. Espaceur selon l'une des revendications précédentes, **caractérisé en ce qu'**il présente une température correspondant au Strain Point supérieure à 530°C.

12. Espaceur selon l'une des revendications précédentes, **caractérisé en ce qu'**il présente un coefficient de dilatation, mesuré entre 20 et 300°C, compris entre 60 et 95.10⁻⁷ K⁻¹.

13. Espaceur selon l'une des revendications précédentes, **caractérisé en ce qu'**il est au moins partiellement diffusant.

14. Espaceur selon l'une des revendications précédentes, **caractérisé en ce qu'**il est obtenu par étirage d'une préforme préalablement usinée ou extrudée, ou par pultrusion.

15. Espaceur selon l'une des revendications précédentes, **caractérisé en ce que** les sommets de la section polygonale sont arrondis avec un rayon de courbure compris entre 2 et 10 microns et de préférence entre 5 et 10 microns.

16. Utilisation d'un espaceur selon l'une des revendications 1 à 15 pour maintenir un espace entre deux feuilles de verre dans la réalisation d'un écran de type visualisation, tel qu'un écran plasma, un écran à micropointes ou dans la réalisation de vitrages sous-vide et/ou de lampes planes.

## Patentansprüche

1. Abstandshalter aus Glas, der vorgesehen ist, zwei Substrate voneinander beabstandet zu halten, **dadurch gekennzeichnet, dass** seine Glasmatrix eine spezifische elektrische Volumenleitfähigkeit von 10⁻¹³ bis 10⁻⁵ Ohm⁻¹·cm⁻¹ aufweist.

2. Abstandshalter aus Glas nach Anspruch 1, **dadurch gekennzeichnet, dass** seine Glasmatrix wenigstens 1 % Oxide von Übergangselementen, die in mehreren Oxidationsstufen vorliegen, umfasst.

3. Abstandshalter nach Anspruch 2, **dadurch gekennzeichnet, dass** die Glasmatrix folgende Bestandteile innerhalb nachstehender molarer Anteilsbereiche umfasst:
| | |
|---|---|
| SiO₂ | 25 bis 75 % |
| Al₂O₃ | 0 bis 40 % |
| ZrO₂ | 0 bis 10 % |
| R₂O | 0 bis 10 % |
| R'O | 0 bis 40 % |
| Oxide von Übergangsele- | |
| menten, die in mehreren | 1 bis 30 % |
| Oxidationsstufen vorliegen | |
wobei
R = Li, Na oder K und
R' = Mg, Ca, Sr oder Ba.

4. Abstandshalter nach einem der vorhergehenden Ansprüche, **dadurch gekennzeichnet, dass** die Glasmatrix das Oxid Li₂O mit einem Gehalt von über 1 % enthält.

5. Abstandshalter nach einem der Ansprüche 2 bis 4, **dadurch gekennzeichnet, dass** die Summe der in der Glasmatrix vorliegenden Übergangselementoxide mehr als 5 % beträgt.

6. Abstandshalter nach einem der Ansprüche 1 bis 5, **dadurch gekennzeichnet, dass** er einen Elastizitätsmodul von mindestens 90 GPa aufweist.

7. Abstandshalter nach Anspruch 6, **dadurch gekennzeichnet, dass** die Glasmatrix Seltenerdmetalloxide mit einem molaren Gehalt von 1 bis 25 % und/oder Stickstoff enthält.

8. Abstandshalter nach einem der vorhergehenden Ansprüche, **dadurch gekennzeichnet, dass** er ein spezifisches Gewicht von über 3 aufweist.

9. Abstandshalter nach einem der vorhergehenden Ansprüche, **dadurch gekennzeichnet, dass** er die Form eines geraden Prismas aufweist, dessen Querschnitt ein orthogonales Polygon und vorzugsweise kreuzförmig ist.

10. Abstandshalter nach einem der vorhergehenden Ansprüche, **dadurch gekennzeichnet, dass** er bei Stromdurchgang einen elektrischen Widerstand von 10⁻⁵ bis 10⁷ GΩ, vorzugsweise zwischen 10⁻⁵ und 200 GΩ, ebenfalls bevorzugt zwischen 0,1 und 200 GΩ, ebenfalls bevorzugt zwischen 1 und 100 GΩ, und ebenfalls bevorzugt gleich 10 GΩ besitzt.

11. Abstandshalter nach einem der vorhergehenden Ansprüche, **dadurch gekennzeichnet, dass** er eine dem Strain Point entsprechende Temperatur von über 530 °C aufweist.

12. Abstandshalter nach einem der vorhergehenden Ansprüche, **dadurch gekennzeichnet, dass** er einen bei zwischen 20 und 300 °C gemessenen Ausdehnungskoeffizienten von 60 bis 95·10⁻⁷ K⁻¹ aufweist.

13. Abstandshalter nach einem der vorhergehenden Ansprüche, **dadurch gekennzeichnet, dass** er wenigstens teilweise lichtstreuend ist.

14. Abstandshalter nach einem der vorhergehenden Ansprüche, **dadurch gekennzeichnet, dass** er durch Ziehen eines Vorformlings erhalten worden ist, der zuvor maschinell bearbeitet, extrudiert oder pultrudiert wurde.

15. Abstandshalter nach einem der vorhergehenden Ansprüche, **dadurch gekennzeichnet, dass** die Spitzen des polygonalen Querschnitts mit einem Krümmungsradius von 2 bis 10 Mikrometern und vorzugsweise zwischen 5 und 10 Mikrometern abgerundet worden sind.

16. Verwendung eines Abstandshalters nach einem der Ansprüche 1 bis 15 zur Aufrechterhaltung eines Zwischenraums zwischen zwei Glasscheiben bei der Herstellung von einem Bildschirm wie einem Plasmabildschirm und einem FED oder ein Vakuum enthaltenden Verglasungen und/oder planen Lampen.

## Claims

1. Glass spacer intended to keep two substrates spaced apart, **characterized in that** its glass matrix has a volume, electronic conductivity of between 10⁻¹³ and 10⁻⁵ ohm⁻¹.cm⁻¹.

2. Glass spacer according to Claim 1, **characterized in that** its glass matrix comprises at least 1% of oxides of transition elements existing in several oxidation states.

3. Spacer according to Claim 2, **characterized in that** the glass matrix comprises the constituents below in the following molar proportions:
| | |
|---|---|
| SiO₂ | 25 - 75% |
| Al₂O₃ | 0 - 40% |
| ZrO₂ | 0 - 10% |
| R₂O | 0 - 10% |
| R'0 | 0 - 40% |
| Oxides of transition elements existing in several oxidation states | 1 - 30% |
where R = Li, Na or K and
R' = Mg, Ca, Sr or Ba.

4. Spacer according to one of the preceding claims, **characterized in that** the glass matrix contains the oxide Li₂O with a content of greater than 1%.

5. Spacer according to one of Claims 2 to 4, **characterized in that** the sum of the oxides of transition elements present in the glass matrix is greater than 5%.

6. Spacer according to one of Claims 1 to 5, **characterized in that** it has a modulus of elasticity of at least 90 GPa.

7. Spacer according to Claim 6, **characterized in that** the glass matrix includes oxides of rare earths with a molar content of between 1 and 25% and/or nitrogen.

8. Spacer according to one of the preceding claims, **characterized in that** it has a density of greater than 3.

9. Spacer according to one of the preceding claims, **characterized in that** it is in the form of a right prism, the cross section of which is an orthogonal polygon and the cross section of which is preferably cruciform.

10. Spacer according to one of the preceding claims, **characterized in that** it has an electrical resistance to the passage of current of between 10⁻⁵ GΩ and 10⁷ GΩ, preferably between 10⁻⁵ GΩ and 200 GΩ, more preferably between 0.1 GΩ and 200 GΩ, more preferably between 1 GΩ and 100 GΩ and more preferably equal to 10 GΩ.

11. Spacer according to one of the preceding claims, **characterized in that** it has a temperature corresponding to the strain point of greater than 530°C.

12. Spacer according to one of the preceding claims, **characterized in that** it has an expansion coefficient, measured between 20 and 300°C, of between 60 and 95 × 10⁻⁷ K⁻¹.

13. Spacer according to one of the preceding claims, **characterized in that** it is at least partly scattering.

14. Spacer according to one of the preceding claims, **characterized in that** it is obtained by drawing a preform, machined or extruded beforehand, or by pultrusion.

15. Spacer according to one of the preceding claims, **characterized in that** the vertices of the polygonal cross section are rounded with a radius of curvature of between 2 and 10 microns and preferably between 5 and 10 microns.

16. Use of a spacer according to one of Claims 1 to 15 for keeping a space between two glass sheets in the production of a display-type screen, such as a plasma screen or a microdot screen, or in the production of vacuum glazing units and/or flat lamps.
